# EUROPÄISCHE PATENTSCHRIFT

(11) **EP 1 803 944 B1**
(45) Veröffentlichungstag und Bekanntmachung des Hinweises auf die Patenterteilung: **30.09.2009**
(21) Anmeldenummer: 05028710.1
(22) Anmeldetag: 30.12.2005
(51) Int. Cl.: F15B 21/04, B23Q 11/00

(54) **Federsystem zur Schwingungsisolation mit einem System zur Fluidzuführung und Verfahren zur Fluidzuführung**
Vibration isolation system with a fluid supply system and method of supplying fluid
Système d'isolation de vibrations avec système d'alimentation en fluide et méthode d'alimentation

(43) Veröffentlichungstag der Anmeldung: 04.07.2007
(73) Patentinhaber: Integrated Dynamics Engineering GmbH, 65479 Raunheim (DE)
(72) Erfinder: Heiland, Peter, 65479 Raunheim (DE)
(74) Vertreter: Herden, Andreas F.

(56) Entgegenhaltungen:
- EP-A- 0 212 462
- EP-A- 0 927 380
- DE-A1- 10 257 810
- US-A- 4 690 572
- US-A- 5 478 043

## Beschreibung

### Gebiet der Erfindung

Die Erfindung betrifft ein System zur Fluidzuführung für ein Schwingungsisolationssytem, insbesondere eine Fluidzuführung für Luftlager.

### Hintergrund der Erfindung

Systeme zur Schwingungsisolation, die Luftlager umfassen, sind bekannt. So zeigt beispielsweise die europäische Patentschrift EP 927 380 B1 (Erfinder: Peter Heiland, Erik Loopstra) ein lithographisches Gerät, welches über ein horizontal und vertikal wirksames Luftlager schwingungsisoliert ist. Je nach zu isolierender Last haben bekannte Luftlager einen hohen Luftverbrauch. Um das Luftlager wechselnden Anforderungen, wie beispielsweise unterschiedlichen Lasten, anpassen zu können, ist bei bekannten Luftlagersystemen zumeist ein Steuer- oder Regelventil zur Einstellung des Volumenstroms beziehungsweise des Druckgefälles vor und nach dem Ventil vorgesehen. Die DE 102 57 810 A1 zeigt einen regelbaren Schwingungsisolator, der sich von außen über mehrere Druckregler einstellen lässt.

Derartige Steuer- oder Regelventile haben den Nachteil, dass die Ventile wegen komplizierter Geometrien und der im Ventil höheren Strömungsgeschwindigkeiten Druckschwankungen in der Luftzuführung nach sich ziehen.

Durch derartige, meist periodisch auftretende Druckschwankungen wird ein Kraftrauschen verursacht, welches die Isolationswirkung des Schwingungsisolationssystems beeinträchtigt.

### Aufgabe der Erfindung

Der Erfindung liegt demgegenüber die Aufgabe zugrunde, ein System zur Fluidzuführung in einem Schwingungsisolationssystem bereit zu stellen, welches zuverlässig ist und die Nachteile des zuvor genannten Standes der Technik reduziert.

Insbesondere soll durch das durch die Fluidzuführung verursachte Kraftrauschen verringert werden.

Weiter ist Aufgabe der Erfindung, ein System zur Fluidzuführung bereit zu stellen, welches den Einsatz von Servoventilen mit geringer Förderleistung ermöglicht.

### Zusammenfassung der Erfindung

Die Aufgabe der Erfindung wird bereits durch ein Schwingungsisolationssystem nach Anspruch 1 sowie durch ein Verfahren zur Fluidzuführung für Schwingungsisolationssysteme gelöst.

Bevorzugte Ausführungsformen und Weiterbildungen der Erfindung sind den jeweiligen Unteransprüchen zu entnehmen.

Gemäß der Erfindung ist ein Schwingungsisolationssystem vorgesehen. Insbesondere betrifft die Erfindung Schwingungsisolationssysteme, die ein oder mehrere Luftlager umfassen. Dabei ist eine Zuleitung zur Fluidzuführung vorgesehen, die ein steuer- oder regelbares Ventil umfasst.

Erfindungsgemäß ist die Fluidzuführung abschnittsweise zumindest in einen ersten und einen zweiten Zuleitungsabschnitt geteilt, wobei über das Ventil der Fluidstrom in dem ersten Zuleitungsabschnitt steuer- oder regelbar ist gemäß Anspruch 1.

Gemäß der Erfindung wird ein Teil des Volumenstroms an dem für die Steuerung oder Regelung erforderlichen Ventil vorbei geleitet. Es wird eine konstante Grundlast am Ventil vorbei geführt. So wird der Einsatz von Servoventilen, das heisst von Ventilen, die einen Signaleingang aufweisen, insbesondere für ein elektrisches Signal, und die über dieses Signal steuerbar sind, mit vergleichsweise geringer Fördermenge ermöglicht.

Derartige kleine Servoventile führen zu weniger Kraftrauschen. Auch ist es somit erstmals möglich, Ventile bereit zu stellen, die im wesentlichen hysteresefrei arbeiten, so dass das Ventil nicht gedithert, das heisst mit einem periodischen Eingangssignal in Bewegung gehalten werden muss, da ansonsten die Hystereseschleife des Ventils eine exakte Regelung unmöglich machen würde.

Es können einfache Druckregelventile verwendet werden, und die Durchflussgeschwindigkeiten im Ventil bleiben gering. ' Vorzugsweise wird im Betriebszustand mehr als 60 %, besonders bevorzugt mehr als 80 % des Fluidstromes über den zweiten Zuleitungsabschnitt geführt, So fließt nur noch ein relativ kleiner Teil des Volumenstroms über das Ventil.

In der Regel reicht es aus, wenn etwa 20 % des Volumenstromes über das steuer- und regelbare Ventil geführt werden, da Luftlager zumeist einen hohen Grundverbrauch haben. Daher muss nur ein kleiner Teil des Volumenstroms geregelt werden.

Bei einer Weiterbildung der Erfindung ist das Ventil im Wesentlichen hysteresefrei ausgebildet. Dies bedeutet, dass das Ventil nicht gedithert, also periodisch bewegt werden muss, um eine hinreichend genaue Regelung zu erreichen.

Die Erfindung ist aber nicht auf den Einsatz hysteresefreier Ventile beschränkt, sondern ermöglicht auch den Einsatz von Ventilen, die aufgrund ihrer zu großen Hystereseschleife gedithert werden müssen.

Das Ventil ist vorzugsweise als elektrisch steuerbares Servoventil ausgestaltet. So kann das Ventil beispielsweise über einen Rechner gesteuert werden, der seinerseits Größen, die zur Bestimmung der notwendigen Luftzufuhr erforderlich sind, von Sensoren erhält.

Bei einer bevorzugten Ausführungsform der Erfindung umfasst die Zuleitung ein Puffervolumen, welches vorzugsweise nach dem ersten und zweiten Zuleitungsabschnitt angeordnet ist. Ein derartiges Puffervolumen verringert das von den Ventilen ausgehende Kraftrauschen weiter.

Vorzugsweise ist das Puffervolumen zwischen 0,02 und 100 1 groß.

Bei einer Weiterbildung der Erfindung ist der Fluidstrom in dem zweiten Zuleitungsabschnitt über eine Drossel oder ein zweites Ventil steuer- oder regelbar.

Es ist insbesondere ein Ventil vorgesehen, welches von Hand eingestellt wird und eine grobe Einstellung der beiden Leitwerte in dem ersten Zuleitungsabschnitt und in dem zweiten Zuleitungsabschnitt ermöglicht. Dadurch, dass das zweite Ventil nicht als Servoventil ausgebildet sein muss, können Ventile mit wesentlich einfacherer Geometrie verwendet werden, die weit weniger zu Turbulenzen und zu damit verbundenem Kraftrauschen führen, wie die zuvor beschriebenen Servoventile zur Steuerung oder Regelung des laufenden Fluidstromes.

Mittels des ersten Ventils ist der Fluidstrom vorzugsweise mit einem Fehler von unter 1 %, bevorzugt von unter 0,5 %, steuer- oder regelbar. Unter dem in % angegebenen Fehler wird die Abweichung des Volumenstroms von einem Sollwert verstanden. Dabei gehen Effekte, wie Nichtlinearität der Regelung, Hystereseschleifen sowie Totzone des Ventils ein.

Der Fluiddurchfluss durch den ersten Zuleitungsabschnitt beträgt vorzugsweise weniger als 100 N1/min, bevorzugt weniger als 50 N1/min und besonders bevorzugt weniger als 20 N1/min, wobei der Druck, insbesondere vor dem ersten Zuleitungsabschnitt, zwischen 2 und 20 bar, bevorzugt zwischen 5 und 8 bar, beträgt.

Die Erfindung betrifft ein Federsystem zur Schwingungsisolation mit einem System zur Fluidzuführung.

Mit einem derartigen Federsystem ist es möglich, bereits bei einer Anregungsfrequenz von 5 Hz eine Dämpfung von über 3 dB, bevorzugt über 5 dB und besonders bevorzugt über 10 dB, zu erreichen.

Bei einer Anregungsfrequenz von 15 Hz wird bereits eine Dämpfung von über 10 dB, bevorzugt von über 20 dB und besonders bevorzugt von über 25 dB, erreicht.

Es ist mit der Erfindung also möglich, Federsysteme zur Schwingungsisolation mit sehr geringer Steifigkeit bereit zu stellen.

Gleichzeitig können Federsysteme mit hoher Tragkraft, insbesondere mit einer Tragkraft über 1000 N, bevorzugt über 500 N und besonders bevorzugt über 10.000 N bereit gestellt werden.

Die Erfindung betrifft des Weiteren ein Verfahren zur Fluidzuführung für Schwingungsisolationssysteme, wobei die Fluidzufuhr zumindest ein steuer- oder regelbares Ventil umfasst.

Gemäß der Erfindung wird das Fluid aufgeteilt und abschnittsweise durch einen ersten und zweiten parallelen Zuleitungsabschnitt geführt. Über das Ventil wird der Fluidstrom in dem ersten Zuleitungsabschnitt gesteuert oder geregelt.

Die Steuerung oder Regelung des Ventils erfolgt bei einer Weiterbildung der Erfindung über zumindest einen Signalgeber. Ein derartiger Signalgeber kann beispielsweise die Position der isolierenden Last erfassen.

Über eine geeignete Verarbeitungseinheit, insbesondere einen Mikroprozessor, wird das Ventil angesteuert und der Volumenstrom je nach Anforderung geregelt. Insbesondere kann bei Störeinflüssen eine aktive Gegenregelung erfolgen.

Über den ersten Zuleitungsabschnitt wird dabei vorzugsweise ein Volumenstrom von weniger als 50 Nl/min, besonders bevorzugt von weniger als 30 Nl/min und besonders bevorzugt von weniger als 15 Nl/min, geleitet.

### Beschreibung der Zeichnung

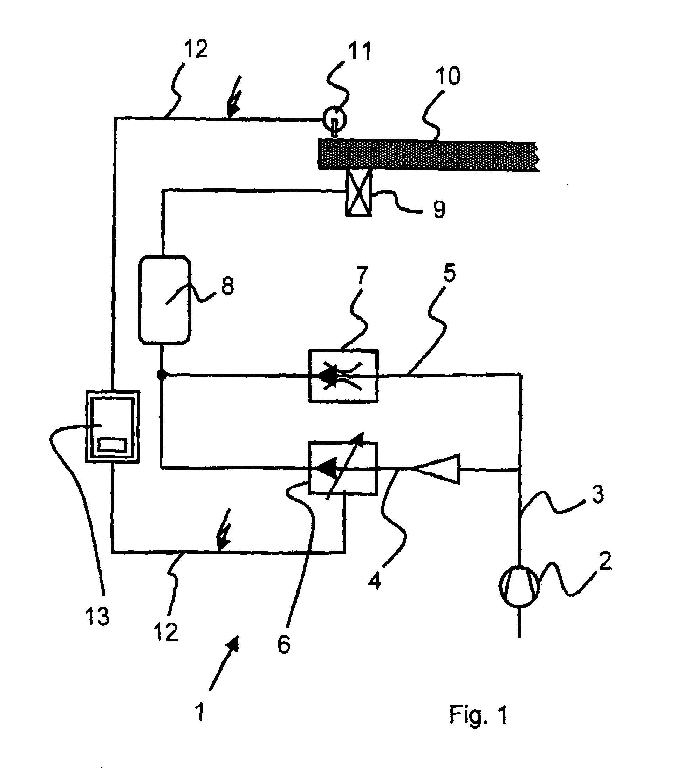

Die Erfindung soll im Folgenden unter Bezugnahme auf Fig. 1 näher erläutert werden, die schematisch ein erfindungsgemäßes Federsystem zur Schwingungsisolation zeigt.

### Detaillierte Beschreibung der Zeichnung

Unter Bezugnahme auf Fig. 1 soll ein erfindungsgemäßes Federsystem zur Schwingungsisolation anhand einer schematischen Darstellung näher erläutert werden.

Die Fig. 1 zeigt ein Federsystem 1 zur Schwingungsisolation, bei welchem eine Last 10, gemäß dem Ausführungsbeispiel in Form eines Tisches, auf zumindest einem Luftlager 9 gelagert ist. Es handelt sich dabei um ein vertikal und horizontal wirksames Luftlager, wie es in der europäischen Patentschrift EP 927 380 beschrieben ist und auf deren Offenbarungsgehalt hiermit vollumfänglich Bezug genommen wird.

Das System verfügt über eine Pumpe 2, welche über eine Zuleitung 3 Druckluft für das Luftlager 9 bereit stellt.

Die Zuleitung 3 ist in einen ersten und einen zweiten Zuleitungsabschnitt 4, 5 geteilt. Der erste Zuleitungsabschnitt 4 hat einen geringeren Durchmesser als der zweite Zuleitungsabschnitt 5. Im ersten Zuleitungsabschnitt ist ein elektrisch betätigbares Servoventil 6 angeordnet. Dieses Servoventil 6 dient der Anpassung des Luftlagers 9, beispielsweise an wechselnde Last.

Dazu ist das Servoventil 6 über eine Signalleitung 12 mit einem Rechner 13 verbunden. Der Rechner 13 ist seinerseits über eine Signalleitung 12 mit einem Positionssensor 11 verbunden, der die Position der Last 10 misst und an den Rechner 13 weiter gibt.

Parallel zum ersten Zuleitungsabschnitt 4 ist ein weiterer Zuleitungsabschnitt 5 vorgesehen, über welchen die Grundluftzufuhr für das Luftlager 9 bereit gestellt wird.

In diesem zweiten Zuleitungsabschnitt 5 ist ein Drosselventil 7 vorgesehen, über welches das Leitwertverhältnis zwischen erstem und zweitem Zuleitungsabschnitt 4, 5 manuell eingestellt werden kann.

Erster und zweiter Zuleitungsabschnitt 4, 5 werden sodann wieder zusammen geführt und in ein Puffervolumen 8 geleitet, welches das von den Zuleitungen und Ventilen ausgehende Rauschen weiter minimiert.

### Bezugszeichenliste

- 1: Federsystem zur Schwingungsisolation
- 2: Pumpe
- 3: Zuleitung
- 4: erster Zuleitungsabschnitt
- 5: zweiter Zuleitungsabschnitt
- 6: Servoventil
- 7: Drosselventil
- 8: Puffervolumen
- 9: Luftlager
- 10: Last
- 11: Positionssensor
- 12: Signalleitung
- 13: Rechner

## Patentansprüche

1. Federsystem zur Schwingungsisolation (1) mit zumindest einem Luftlager, umfassend ein System zur Fluidzuführung für das Schwingungsisolationssystem mit zumindest einer Zuleitung (3) zur Fluidzuführung, die zumindest ein steuer- und/oder regelbares Ventil (6) umfasst,
**dadurch gekennzeichnet, dass**
die Zuleitung zur Fluidzuführung abschnittsweise in zumindest einen ersten (4) und einen zweiten (5) Zuleitungsabschnitt geteilt ist,
wobei über das steuer- und/oder regelbare Ventil (6), welches im ersten Zuleitungsabschnitt (4) angeordnet ist, der Fluidstrom in dem ersten (4) Zuleitungsabschnitt steuer- und/oder regelbar ist und
wobei erster (4) und zweiter (5) Zuleitungsabschnitt sodann wieder zusammengeführt sind.

2. Federsystem zur Schwingungsisolation (1) nach Anspruch 1, **dadurch gekennzeichnet, dass** im Betriebszustand mehr als 60 %, bevorzugt mehr als 70 %, besonders bevorzugt mehr als 80 % des Fluidstromes über den zweiten Zuleitungsabschnitt (5) führbar ist.

3. Federsystem zur Schwingungsisolation (1) nach einem der vorstehenden Ansprüche, **dadurch gekennzeichnet, dass** das steuer- und/oder regelbare Ventil (6) im Wesentlichen hysteresefrei ausgebildet ist.

4. Federsystem zur Schwingungsisolation (1) nach einem der Ansprüche 1 oder 2, **dadurch** gekenntzeichnet, dass das steuer- und/oder regelbare Ventil (6) ditherbar ist.

5. Federsystem zur Schwingungsisolation (1) nach einem der vorstehenden Ansprüche, **dadurch gekennzeichnet, dass** das steuer- und/oder regelbare Ventil (6) als elektrisch steuerbares Servoventil ausgebildet ist.

6. Federsystem zur Schwingpngsisolation (1) nach einem der vorstehenden Ansprüche, **dadurch gekennzeichnet, dass** die Zuleitung ein Puffervolumen (8) umfasst, welches vorzugsweise in Richtung der Fluidzuführung nach dem ersten (4) und zweiten (5) Zuleitungsabschnitt angeordnet ist.

7. Federsystem zur Schwingungsisolation (1) nach dem vorstehenden Anspruch, **dadurch gekennzeichnet, dass** das Puffervolumen zwischen (8) 0,02 und 100 1 groß ist.

8. Federsystem zur Schwingungsisolation (1) nach einem der vorstehenden Ansprüche, **dadurch gekennzeichnet, dass** der Fluidstrom in dem zweiten Zuleitungsabschnitt (5) über eine zum System zur Fluidzuführung gehörende Drossel (7) und/oder ein zum System zur Fluidzuführung gehörendes zweites Ventil einstellbar ist.

9. Federsystem zur Schwingungsisolation (1) nach einem der vorstehenden Ansprüche, **dadurch gekennzeichnet, dass** der Fluidstrom mittels des steuer- und/oder regelbaren Ventils (6) mit einem Fehler von unter 1 %, bevorzugt unter 0,5 % steueroder regelbar ist.

10. Federsystem zur Schwingungsisolation (1) nach einem der vorstehenden Ansprüche, **dadurch gekennzeichnet, dass** der Fluiddurchfluss durch den ersten Zuleitungsabschnitt (4) weniger als 100 Nl/min (Normliter/Minute), bevorzugt weniger als 50 Nl/min und besonders bevorzugt weniger als 20 Nl/min beträgt.

11. Federsystem zur Schwinungsisolation (1) nach einem der vorstehenden Ansprüche, **dadurch gekennzeichnet, dass** im Betriebszustand der Druck im Zuleitungssystem in Richtung der Fluidzuführung vor dem und/oder nach dem ersten (4) und zweiten (5) Zuleitungsabschnitt zwischen 2 und 20 bar, bevorzugt zwischen 5 und 8 bar beträgt.

12. Federsystem zur Schwingungsisolation (1) nach einem der vorstehenden Ansprüche
**dadurch gekennzeichnet, dass** das Federsystem bei einer Anregungsfrequenz von 5 Hz eine Dämpfung von mehr als 3 dB, bevorzugt über 5 dB und besonders bevorzugt über 10 dB aufweist.

13. Federsystem zur Schwingungsisolation (1) nach einem der vorstehenden Ansprüche, **dadurch gekennzeichnet, dass** das Federsystem bei einer Anregungsfrequenz von 15 Hz eine Dämpfung von mehr als 10 dB, bevorzugt über 20 dB und besonders bevorzugt über 25 dB aufweist.

14. Federsystem zur Schwingungsisolation (1) nach einem der vorstehenden Ansprüche, **dadurch gekennzeichnet, dass** das Federsystem eine Tragkraft über 1000 N, bevorzugt über 5000 N, besonders bevorzugt über 10000 N hat.

15. Verfahren zur Fluidzuführung für Schwingungsisolationssysteme, insbesondere zumindest ein Luftlager (9) umfassende Schwingungsisolationssysteme, wobei die Fluidzufuhr zumindest ein steuer- und/oder regelbares Ventil (6) umfasst,
**dadurch gekennzeichnet, dass**
das Fluid abschnittsweise in zumindest einen ersten (4) und einen zweiten (5) Zuleitungsabschnitt geteilt geführt wird, wobei über das steuer- und/oder regelbare Ventil (6), welches in dem ersten (4) Zuleitungsabschnitt angeordnet ist, der Fluidstrom in dem ersten (4) Zuleitungsabschnitt gesteuert- und/oder geregelt wird und
wobei erster (4) und zweiter (5) Zuleitungsabschnitt sodann wieder zusammengeführt werden.

16. Verfahren zur Fluidzuführung für Schwingungsisolationssysteme nach dem vorstehenden Anspruch, **dadurch gekennzeichnet, dass** mehr als 60 %, bevorzugt mehr als 70 %, besonders bevorzugt mehr als 80 % des Fluidstromes über den zweiten (5) Zuleitungsabschnitt geführt werden.

17. Verfahren zur Fluidzuführung für
Schwingungsisolationssysteme nach einem der vorstehenden Ansprüche 15 oder 1b, **dadurch gekennzeichnet, dass** als Ventil ein Servoventil (6) bereitgestellt wird.

18. Verfahren zur Fluidzuführung für
Schwingungsisolationssysteme nach einem der vorstehenden Ansprüche 15 bis 17, **dadurch gekennzeichnet, dass** das Ventil (6) über zumindest einen Signalgeber geregelt wird.

19. Verfahren zur Fluidzuführung für Schwingungsisolationssysteme nach dem vorstehenden Anspruch, **dadurch gekennzeichnet, dass** über den Signalgeber die Position der zu isolierenden Last erfasst wird.

20. Verfahren zur Fluidzuführung für
Schwingungsisolationssysteme nach einem der vorstehenden Ansprüche 15 bis 19, **dadurch gekennzeichnet, dass** der Fluidstrom in dem zweiten (5) Zuleitungsabschnitt über eine Drossel (7) oder ein Ventil (7) eingestellt wird.

21. Verfahren zur Fluidzuführung für Schwingungsisolationssysteme nach dem vorstehenden Anspruch, **dadurch gekennzeichnet, dass** über den ersten Zuleitungsabschnitt (4) ein Volumenstrom von weniger als 50 Nl/min, bevorzugt weniger als 30 Nl/min.und besonders bevorzugt weniger als 15 Nl/min geleitet wird.

## Claims

1. A vibration isolation damping system (1) including at least one air bearing, which system comprises a fluid supply system for the vibration isolation system including at least one supply line (3) for fluid supply that comprises at least one controllable and/or adjustable valve (6),
**characterized in that**
said supply line for fluid supply comprises a section which is split into at least a first (4) and a second (5) supply branch, wherein fluid flow in the first (4) supply branch is controllable and/or adjustable by said controllable and/or adjustable valve (6), and said first (4) and second (5) supply branches are rejoined downstream said valve.

2. The vibration isolation damping system (1) according to claim 1, **characterized in that**, in operation, more than 60 %, preferably more than 70 %, most preferably more than 80 % of the fluid flow is guidable through said second supply branch (5).

3. The vibration isolation damping system (1) according to any of the preceding claims, **characterized in that** said controllable and/or adjustable valve (6) is provided essentially free of hysteresis.

4. The vibration isolation damping system (1) according to any of claims 1 and 2, **characterized in that** said controllable and/or adjustable valve (6) is ditherable.

5. The vibration isolation damping system (1) according to any of the preceding claims, **characterized in that** said controllable and/or adjustable valve (6) is in form of an electric control servo valve.

6. The vibration isolation damping system (1) according to any of the preceding claims, **characterized in that** said supply line comprises a buffer volume (8) which is, in the direction of fluid supply, preferably arranged downstream said first and second supply branches.

7. The vibration isolation damping system (1) according to the preceding claim, **characterized in that** said buffer volume (8) has a size from 0.02 to 100 liters.

8. The vibration isolation damping system (1) according to any of the preceding claims, **characterized in that** fluid flow in the second supply branch is adjustable by a throttle (7) associated with said fluid supply system, and/or by a second valve associated with said fluid supply system.

9. The vibration isolation damping system (1) according to any of the preceding claims, **characterized in that** fluid flow is controllable and/or adjustable by said controllable and/or adjustable valve (6) with an error smaller than 1 %, preferably smaller than 0.5 %.

10. The vibration isolation damping system (1) according to any of the preceding claims, **characterized in that** fluid flow through the first supply branch (4) is smaller than 100 Nl/min (normal liters per minute), preferably smaller than 50 Nl/min and most preferably smaller than 20 Nl/min.

11. The vibration isolation damping system (1) according to any of the preceding claims, **characterized in that**, in operation, the pressure in the supply system upstream and/or downstream said first (4) and second (5) supply branches, in the direction of fluid supply, is between 2 and 20 bars, preferably between 5 and 8 bars.

12. The vibration isolation damping system (1) according to any of the preceding claims, **characterized in that** the damping system, given an excitation frequency of 5 Hz, exhibits a damping action of more than 3 dB, preferably more than 5 dB, and most preferably more than 10 dB.

13. The vibration isolation damping system (1) according to any of the preceding claims, **characterized in that** the damping system, given an excitation frequency of 15 Hz, exhibits a damping action of more than 10 dB, preferably more than 20 dB, and most preferably more than 25 dB.

14. The vibration isolation damping system (1) according to any of the preceding claims, **characterized in that** the damping system has a load-bearing capacity of more than 1000 N, preferably more than 5000 N, and most preferably more than 10,000 N.

15. A method of supplying fluid for vibration isolation systems, in particular for vibration isolation systems which include at least one air bearing (9), wherein a fluid supply comprises at least one controllable and/or adjustable valve (6),
**characterized by**
guiding the fluid, in a section, separately through at least a first (4) and a second (5) supply branch; controlling and/or adjusting the fluid flow in the first (4) supply branch by said controllable and/or adjustable valve (6) which is arranged in said first (4) supply branch; and rejoining said first (4) and second (5) supply branches downstream said valve.

16. The method of supplying fluid for vibration isolation systems according to the preceding claim, **characterized in that** more than 60 %, preferably more than 70 %, and most preferably more than 80 % of the fluid flow is guided through said second (5) supply branch.

17. The method of supplying fluid for vibration isolation systems according to any of the preceding claims 15 or 16, **characterized in that** said valve is provided in form of a servo valve (6).

18. The method of supplying fluid for vibration isolation systems according to any of the preceding claims 15 to 17, **characterized in that** said valve (6) is adjusted via at least one signaling device.

19. The method of supplying fluid for vibration isolation systems according to the preceding claim, **characterized in that** a position of the load to be isolated is detected by said signaling device.

20. The method of supplying fluid for vibration isolation systems according to any of the preceding claims 15 to 19, **characterized in that** the fluid flow within the second (5) supply branch is adjusted by a throttle (7) or a valve (7).

21. The method of supplying fluid for vibration isolation systems according to the preceding claim, **characterized by** guiding a fluid flow smaller than 50 Nl/min, preferably smaller than 30 Nl/min, and most preferably smaller than 15 Nl/min through said first supply branch (4).

## Revendications

1. Système à ressort pour l'isolation des vibrations (1) avec au moins un coussinet d'air, comprenant un système pour l'arrivée de fluide pour le système d'isolation des vibrations,
avec au moins une conduite d'arrivée (3) pour l'arrivée de fluide, qui comporte au moins une vanne (6) pilotable et/ou réglable,
**caractérisé en ce que** la conduite pour l'arrivée de fluide est divisée par tronçons en au moins un premier tronçon (4) et un second tronçon d'arrivée (5), le flux de fluide dans le premier tronçon d'arrivée (4) pouvant être piloté et/ou réglé par la vanne (6) pilotable et/ou réglable qui est disposée dans le premier tronçon d'arrivée (4), et le premier tronçon (4) et le second tronçon d'arrivée (5) étant ensuite regroupés à nouveau.

2. Système à ressort pour l'isolation des vibrations (1) selon la revendication 1, **caractérisé en ce que**, dans l'état de service, plus de 60 %, de préférence plus de 70 %, avec une préférence particulière plus de 80 % du flux de fluide peuvent être guidés au moyen du second tronçon d'arrivée (5).

3. Système à ressort pour l'isolation des vibrations (1) selon l'une quelconque des revendications précédentes, **caractérisé en ce que** la vanne (6) pilotable et/ou réglable est conçue essentiellement sans hystérésis.

4. Système à ressort pour l'isolation des vibrations (1) selon l'une quelconque des revendications 1 ou 2, **caractérisé en ce que** la vanne (6) pilotable et/ou réglable peut vibrer.

5. Système à ressort pour l'isolation des vibrations (1) selon l'une quelconque des revendications précédentes, **caractérisé en ce que** la vanne (6) pilotable et/ou réglable est conçue comme une servo-vanne activable électriquement.

6. Système à ressort pour l'isolation des vibrations (1) selon l'une quelconque des revendications précédentes, **caractérisé en ce que** la conduite d'arrivée comprend un volume tampon (8), qui est disposé de préférence en direction de l'arrivée de fluide après le premier (4) et le second (5) tronçon d'arrivée.

7. Système à ressort pour l'isolation des vibrations (1) selon la revendication précédente,
**caractérisé en ce que** le volume tampon (8) se situe entre 0,02 1 et 100 1.

8. Système à ressort pour l'isolation des vibrations (1) selon l'une quelconque des revendications précédentes, **caractérisé en ce que** le flux de fluide dans le second tronçon d'arrivée (5) peut être réglé au moyen d'un clapet d'étranglement (7) faisant partie du système d'arrivée de fluide et/ou d'une seconde vanne faisant partie du système d'arrivée de fluide.

9. Système à ressort pour l'isolation des vibrations (1) selon l'une quelconque des revendications précédentes, **caractérisé en ce que** le flux de fluide peut être piloté ou réglé au moyen de la vanne (6) pilotable et/ou réglable avec une erreur inférieure à 1 %, de préférence inférieure à 0,5 %.

10. Système à ressort pour l'isolation des vibrations (1) selon l'une quelconque des revendications précédentes, **caractérisé en ce que** le débit de fluide dans le premier tronçon d'arrivée (4) est inférieur à 100 Nl/min (litre normalisé/minute), de préférence inférieur à 50 Nl/min et avec une préférence particulière inférieur à 20 Nl/min.

11. Système à ressort pour l'isolation des vibrations (1) selon l'une quelconque des revendications précédentes, **caractérisé en ce que**, dans l'état de service, la pression dans le système d'arrivée en direction de l'arrivée de fluide avant et/ou après le premier (4) et le second (5) tronçon d'arrivée se situe entre 2 et 20 bars, de préférence entre 5 et 8 bars.

12. Système à ressort pour l'isolation des vibrations (1) selon l'une quelconque des revendications précédentes, **caractérisé en ce que** le système à ressort présente pour une fréquence d'excitation de 5 Hz, un amortissement supérieur à 3 dB, de préférence supérieur à 5 dB et avec une préférence particulière supérieur à 10 dB.

13. Système à ressort pour l'isolation des vibrations (1) selon l'une quelconque des revendications précédentes, **caractérisé en ce que** le système à ressort présente pour une fréquence d'excitation de 15 Hz un amortissement supérieur à 10 dB, de préférence supérieur à 20 dB et avec une préférence particulière supérieur à 25 dB.

14. Système à ressort pour l'isolation des vibrations (1) selon l'une quelconque des revendications précédentes, **caractérisé en ce que** le système à ressort a une force portante supérieure à 1000 N, de préférence supérieure à 5000 N, et avec une préférence particulière supérieure à 10000 N.

15. Procédé pour l'arrivée de fluide pour des systèmes d'isolation des vibrations, en particulier des systèmes d'isolation des vibrations comprenant au moins un coussinet d'air (9), l'arrivée de fluide comprenant au moins une vanne (6) pilotable et/ou réglable,
**caractérisé en ce que**
le fluide est guidé divisé par tronçons en au moins un premier (4) et un second (5) tronçon d'arrivée, le flux de fluide dans le premier (4) tronçon d'arrivée étant piloté et/ou réglé au moyen de la vanne (6) pilotable et/ou réglable, qui est disposée dans le premier tronçon d'arrivée, et
le premier (4) et le second (5) tronçon d'arrivée étant ensuite regroupés à nouveau.

16. Procédé pour l'arrivée de fluide pour des systèmes d'isolation des vibrations selon la revendication précédente, **caractérisé en ce que** plus de 60 %, de préférence plus de 70 %, et avec une préférence particulière plus de 80 % du flux de fluide sont guidés au moyen du second (5) tronçon d'arrivée.

17. Procédé pour l'arrivée de fluide pour des systèmes d'isolation des vibrations selon l'une quelconque des revendications précédentes 15 ou 16, **caractérisé en ce qu'**une servo-vanne (6) est mise à disposition comme vanne.

18. Procédé pour l'arrivée de fluide pour des systèmes d'isolation des vibrations selon l'une quelconque des revendications précédentes 15 à 17, **caractérisé en ce que** la vanne (6) est réglée au moyen d'au moins un générateur de signaux.

19. Procédé pour l'arrivée de fluide pour des systèmes d'isolation des vibrations selon la revendication précédente, **caractérisé en ce que** la position de la charge à isoler est détectée au moyen du générateur de signaux.

20. Procédé pour l'arrivée de fluide pour des systèmes d'isolation de vibrations selon l'une quelconque des revendications précédentes 15 à 19, **caractérisé en ce que** le flux de fluide dans le second (5) tronçon d'arrivée est réglé au moyen d'un clapet d'étranglement (7) ou d'une vanne (7).

21. Procédé pour l'arrivée de fluide pour des systèmes d'isolation des vibrations selon la revendication précédente, **caractérisé en ce qu'**un flux volumique inférieur à 50 Nl/min, de préférence inférieur à 30 Nl/min et avec une préférence particulière inférieur à 15 Nl/min est acheminé au moyen du premier tronçon d'arrivée (4).
